# FASCICULE DE BREVET EUROPEEN

(11) **EP 3 234 391 B1**
(45) Date de publication et mention de la délivrance du brevet: **19.05.2021**
(21) Numéro de dépôt: 15817485.4
(22) Date de dépôt: 07.12.2015
(51) Int. Cl.: F16D 9/06

(54) **FUSIBLE MÉCANIQUE FRANGIBLE PAR TORSION ET GROUPE DE REFROIDISSEMENT D'UN TURBOMOTEUR ÉQUIPÉ D'UN TEL FUSIBLE**
DURCH VERDREHEN BRECHBARE MECHANISCHE SICHERUNG UND KÜHLEINHEIT EINES TURBINENMOTORS MIT EINER DERARTIGEN SICHERUNG
TWIST-BREAKABLE MECHANICAL FUSE AND COOLING UNIT OF A TURBINE ENGINE FITTED WITH SUCH A FUSE

(30) Priorité: 15.12.2014 FR 1462399
(43) Date de publication de la demande: 25.10.2017
(73) Titulaire: Safran Helicopter Engines, 64510 Bordes (FR)
(72) Inventeur: CLADIERE, Mathieu, 77550 Moissy-Cramayel (FR); BUENO, Armand, 64510 Assat (FR); DESCUBES, Olivier, Pierre, 64800 Nay (FR); VERGEZ, Stéphane, 64460 Aast (FR)
(74) Mandataire: Gevers & Orès
(86) Numéro de dépôt international: PCT/FR2015/053355
(87) Numéro de publication internationale: WO 2016/097529

(56) Documents cités:
- EP-A2- 1 382 805
- US-A- 4 313 712
- US-A1- 2003 021 691
- US-A1- 2005 186 861
- US-B1- 6 478 543

## Description

### 1. Domaine technique de l'invention

L'invention concerne un groupe de refroidissement d'un turbomoteur équipé d'un fusible mécanique.

### 2. Arrière-plan technologique

Dans de nombreux domaines techniques, en particulier pour des applications aéronautiques, il est souvent nécessaire de disposer d'accouplements d'arbres mécaniques qui peuvent se rompre lorsque ces accouplements sont soumis à des couples de forces opposées qui dépassent une valeur prédéterminée. Cette fonctionnalité permet de protéger les pièces en aval de ces accouplements. Pour ce faire, il est connu de ménager des sections frangibles par torsion sur les lignes d'arbre. Une telle section frangible par torsion présente la particularité de pouvoir se rompre lorsqu'elle est soumise à l'action d'un couple de forces opposées supérieur à une valeur prédéterminée.

Une solution connue pour former une section frangible par torsion sur une ligne d'arbre consiste à utiliser un arbre plein qui présente une réduction locale de son diamètre de telle sorte que cette partie de petit diamètre puisse se rompre lorsque le couple dépasse une valeur prédéterminée.

L'un des inconvénients de cette solution est que lorsque la section frangible se rompt, il est nécessaire de remplacer tout l'arbre, ce qui nécessite, pour certaines applications, de démonter tous les organes reliés à cet arbre. C'est particulièrement le cas pour les groupes de refroidissement de turbomoteurs. Un groupe de refroidissement comprend un pignon et un rouet monté en porte à faux sur l'arbre portant le pignon. Si la section frangible formée sur l'arbre par réduction locale du diamètre se casse, il est nécessaire de démonter le rouet et le module réducteur relié au groupe de refroidissement pour pouvoir remplacer l'arbre d'entrainement. Cela rend la maintenance et le remplacement d'une telle section frangible compliquée et peu pratique à mettre en œuvre.

En outre, si le couple maximal est relativement faible, ce qui est le cas par exemple des rouets des groupes de refroidissement, la section frangible peut être de petite dimension, ce qui peut imposer des contraintes de montage (pour ne pas la solliciter) et des contraintes de fonctionnement (dynamique de la ligne d'arbre, déplacement sous charge des manœuvres) importantes.

Une autre solution pour ménager une section frangible par torsion sur une ligne d'arbre consiste à utiliser un arbre creux avec une réduction locale de matière sur sa paroi interne ou externe. Les inconvénients de la solution précédente sont toujours présents avec cette solution. De plus, le dimensionnement en couple de rupture de cette solution donne des épaisseurs trop faibles pour être bien maîtrisées.

Une autre solution consiste à fretter un organe mécanique sur l'autre et à maitriser l'effort de glissement. L'un des inconvénients de cette solution est la difficulté de bien maitriser le glissement dans la plage de fonctionnement en température des organes concernés. Cet inconvénient rend cette solution particulièrement peu adaptée aux groupes de refroidissement de turbomoteurs.

Il existe donc un besoin de disposer d'une solution améliorée pour ménager une section frangible en torsion au sein d'un accouplement mécanique d'organes au sein d'un turbomoteur. Un tel besoin s'exprime notamment, mais pas uniquement, pour des utilisations au sein des groupes de refroidissement de turbomoteurs.

En particulier, il existe un besoin de disposer d'une solution qui permet un remplacement de cette section frangible sans difficultés particulières et notamment sans nécessiter un démontage complet des organes mécaniques concernés par cet accouplement

EP1382805A2 décrit notamment l'architecture d'un module de soufflante d'un turboréacteur. Le fusible est statique et configuré pour pouvoir se rompre sous l'effet d'un balourd engendré par la rupture totale ou partielle d'une aube de soufflante.

US2003/021691A1 décrit la transmission de puissance entre un arbre d'entraînement et un manchon solidaire de l'hélice. Des tiges de cisaillement sont placées entre l'arbre d'entraînement et le manchon. Les tiges de cisaillement permettent d'amortir un impact de l'hélice avec un corps étranger.

Dans le US4313712A le moyen de support est formé dans l'arbre, ainsi le moyen de support ne relie pas un organe moteur et un organe récepteur. Les fusibles sont des boulons de cisaillement susceptibles de se rompre sous l'effet d'un balourd engendré par la perte totale ou partielle d'une aube de soufflante. à

### 3. Objectifs de l'invention

L'invention vise à pallier au moins certains des inconvénients des solutions connues pour ménager des sections frangibles par torsion au sein d'accouplement mécaniques au sein d'un turbomoteur.

L'invention vise aussi, dans au moins un mode de réalisation de l'invention, à fournir une section frangible intrinsèquement plus robuste au montage et aux efforts en flexion.

L'invention vise aussi à fournir, dans au moins un mode de réalisation de l'invention, une section frangible qui peut être remplacée sans difficultés particulières, par un opérateur.

L'invention vise aussi à fournir un groupe de refroidissement équipé d'une section frangible selon l'invention.

### 4. Exposé de l'invention

Pour ce faire, l'invention concerne un groupe de refroidissement équipé d'une section fusible mécanique frangible selon la revendication 1.

Le fusible selon l'invention comprend un corps s'étendant selon une direction longitudinale parallèle audit axe de rotation, une fois le fusible monté entre lesdits organes moteur et récepteur.

Le fusible selon l'invention est caractérisé en ce que ledit corps comprend une pluralité de barrettes longitudinales, chaque barrette étant adaptée pour être déformée en flexion, sous l'action d'un couple de torsion appliqué à l'ensemble des barrettes, de sorte à former un fusible mécanique frangible.

L'invention propose donc une nouvelle solution pour ménager une section frangible par torsion au sein d'un accouplement d'organes mécaniques au sein d'un turbomoteur. Cette solution consiste à utiliser un fusible mécanique qui est une pièce rapportée qui va relier les deux organes mécaniques l'un avec l'autre. Cette pièce rapportée peut donc être remplacée en cas de rupture de la section frangible. Ce fusible mécanique présente la particularité de comprendre une pluralité de barrettes déformables chacune en flexion sous l'action d'un couple de torsion. Cet ensemble de barrettes ménagées longitudinalement dans l'axe de rotation des organes mécaniques reliés par ce fusible, forme un fusible frangible par torsion. En d'autres termes, la résistance à la torsion du fusible est fonction de la résistance à la flexion des barrettes. Un fusible selon l'invention permet d'augmenter la raideur en flexion, ce qui diminue la sensibilité au balourd. En d'autres termes, un fusible selon l'invention permet de former une section frangible par torsion qui est moins susceptible que les sections frangibles de l'art antérieur de se rompre de manière inappropriée.

En outre, un fusible selon l'invention permet un dimensionnement amélioré de la section frangible par la détermination du nombre de barrettes, de la longueur des barrettes, de la largeur des barrettes, de l'épaisseur des barrettes, de la section droite transversale des barrettes, et de manière générale, de toutes les caractéristiques dimensionnelles et géométriques des barrettes.

Avantageusement, un fusible mécanique selon l'invention comprend des moyens d'accouplement réversible du fusible audit organe moteur agencés à une extrémité longitudinale dudit corps, dite extrémité distale.

Avantageusement et selon l'invention, ladite extrémité distale dudit corps présente une portion cylindrique ou une portion conique, conformée à une portion cylindrique ou conique dudit organe moteur. Ces portions forment les moyens d'accouplement réversible.

Une liaison conique ou cylindrique entre le fusible mécanique et l'organe moteur permet d'assurer une excentration minimale, ce qui permet de limiter le balourd de l'organe récepteur. En particulier, dans le cas d'une utilisation du fusible mécanique selon cette variante comme pièce de liaison entre un pignon d'un groupe de refroidissement et un rouet monté en porte à faux sur le pignon par le biais du fusible mécanique, la liaison conique forme une référence d'équilibrage. Cela permet de garantir que la liaison entre le pignon et le rouet peut être répétée de manière identique lors de chaque montage.

Avantageusement, un fusible selon l'invention comprend des moyens d'accouplement réversible du fusible audit organe récepteur, agencés à une extrémité longitudinale dudit corps, dite extrémité proximale.

Avantageusement et selon l'invention, ladite extrémité proximale dudit corps comprend une platine de fixation adaptée pour être fixée sur ledit organe récepteur. Cette platine de fixation forme les moyens d'accouplement réversible.

Le montage et le démontage d'un fusible mécanique selon cette variante est donc particulièrement aisé. En outre, dans le cadre d'une utilisation selon l'invention sur un groupe de refroidissement d'un turbomoteur, le fusible peut être démonté et remplacé sans nécessiter le démontage du réducteur du groupe notamment.

Avantageusement et selon l'invention, le corps est creux.

Un corps creux permet notamment de passer des éléments de fixation au centre du corps. L'utilisation de barrettes permet de conserver des épaisseurs de matière aisément usinables et dont les dimensions permettent de maitriser la plage de rupture en couple de la section frangible. Ces éléments de fixation comprennent par exemple un écrou ou une vis qui vient se loger dans le corps creux jusqu'à l'extrémité distale du fusible. Ces éléments de fixation concourent à l'assemblage du fusible sur l'organe moteur, en lien avec les portions coniques.

Avantageusement et selon cette variante, le fusible mécanique comprend une entretoise adaptée pour être logée dans ledit corps creux par ladite extrémité proximale et pour pouvoir mettre en appui ladite portion conique de l'extrémité distale sur ladite portion conique conjuguée dudit organe moteur,

L'utilisation d'une entretoise permet de limiter le diamètre interne du fusible mécanique et facilite l'accès aux éléments de fixation du type vis/écrou. En outre, cet appui de la portion conique de l'extrémité distale sur la portion conique de l'organe moteur permet d'assurer l'entrainement en rotation de l'organe récepteur par l'organe moteur par le biais du fusible mécanique.

Avantageusement et selon cette variante, ladite entretoise présente un épaulement permettant de limiter le déplacement axial dudit organe récepteur en cas de rupture mécanique du fusible.

Un épaulement ménagé sur l'entretoise permet de bloquer le déplacement axial de l'organe récepteur en cas de rupture de la section frangible formée par le fusible mécanique.

Selon une autre variante, le fusible mécanique comprend une vis logée directement dans ledit corps creux pour mettre en appui ladite portion conique de l'extrémité distale sur la portion conique conjuguée dudit organe moteur.

Avantageusement et selon l'invention, le corps est cylindrique et le fusible comprend trois barrettes réparties uniformément autour dudit corps.

Bien entendu, selon d'autres variantes, le fusible mécanique peut comprendre plus de trois barrettes.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe d'un groupe de refroidissement d'un turbomoteur selon l'art antérieur comprenant un arbre moteur, un rouet monté en porte à faux sur cet arbre et une section frangible par torsion formée par une réduction de diamètre de l'arbre moteur,
- la figure 2 est une vue schématique en coupe d'un groupe de refroidissement d'un turbomoteur selon un mode de réalisation de l'invention comprenant un arbre moteur, un rouet monté en porte à faux sur cet arbre, et une section frangible par torsion formée par un fusible mécanique selon un mode de réalisation de l'invention,
- la figure 3 est une vue en perspective d'un fusible mécanique selon un mode de réalisation de l'invention,
- les figures 4a et 4b sont des vues schématiques respectivement en coupe et de dessus d'une barrette d'un fusible mécanique selon un mode de réalisation de l'invention.

### 6. Description détaillée d'un mode de réalisation de l'invention

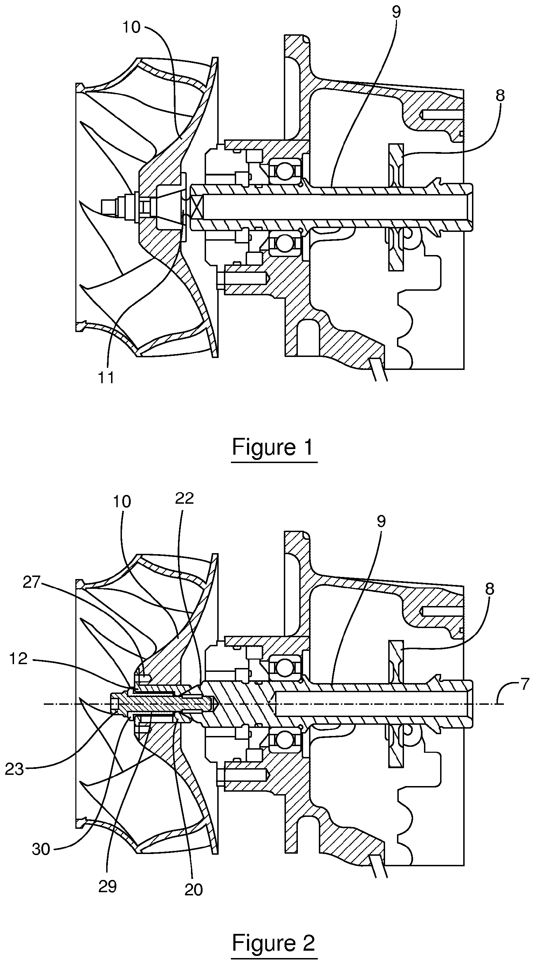

Sur la figure, les échelles et les proportions ne sont pas strictement respectées et ce, à des fins d'illustration et de clarté. Dans toute la description détaillée qui suit en référence aux figures, sauf indication contraire, chaque élément du fusible mécanique est décrit tel qu'il est agencé lorsque le fusible est monté , selon l'invention, dans un groupe de refroidissement d'un turbomoteur, entre le pignon moteur du groupe et le rouet du groupe de refroidissement monté en porte à faux sur le pignon. Cet agencement est représenté sur la figure 2.

Un groupe de refroidissement de l'art antérieur est partiellement représenté sur la figure 1. Ce groupe de refroidissement comprend un pignon 8 monté sur un arbre 9 et un rouet 10 monté en porte à faux sur l'arbre 9. Le pignon 8 et l'arbre 9 sont formés d'un seul tenant de sorte qu'on désigne dans toute la description qui suit, indifféremment, le pignon 8 ou l'arbre 9, pour désigner l'ensemble formé du pignon 8 et de l'arbre 9. Cet accouplement mécanique entre l'arbre 9 et le rouet 10 comprend une section 11 frangible par torsion, formée par une réduction du diamètre de l'arbre 9. Cette section frangible est typiquement matérialisée par une réduction locale du diamètre de l'arbre 9 à environ 5 mm.

Il ressort clairement de la figure 1 que si la section frangible 11 se rompt, il est nécessaire de remplacer l'arbre 9. En outre, pour accéder à l'arbre 9, il est nécessaire de démonter les organes mécaniques reliés en amont de ce pignon, tel qu'un réducteur, non représenté sur les figures à des fins de clarté, et le rouet 10.

La figure 2 est une vue schématique du même groupe de refroidissement dans lequel la section 11 frangible a été remplacée par un fusible 12 mécanique selon un mode de réalisation de l'invention. La forme du rouet 10 et la forme de l'arbre 9 ont été légèrement modifiées pour permettre le montage du fusible mécanique selon l'invention.

En particulier, ce fusible mécanique comprend un corps creux 13, une extrémité 20 distale configurée pour être mise en appui contre une extrémité de l'arbre 9, et une extrémité 21 proximale configurée pour être assemblée au rouet 10.

Pour ce faire, l'extrémité 20 distale comprend une portion conique interne (cette portion conique est visible sur la figure 2) qui est conformée à une portion 22 conique ménagée à l'extrémité de l'arbre 9. En outre, une vis 23 peut être logée dans le corps 13 creux par l'extrémité 21 proximale pour pouvoir fixer solidairement le fusible mécanique 12 et l'arbre 9. Pour ce faire, la portion 22 conique de l'arbre 9 présente un alésage fileté adapté pour recevoir la vis 23.

La vis 23 et les portions coniques 20, 22 forment les moyens d'assemblage du fusible 13 sur l'arbre 9.

L'extrémité 21 proximale du fusible comprend une platine 25 de fixation. Cette platine comprend quatre alésages 26, chaque alésage pouvant recevoir un pion fretté 27 permettant de fixer le rouet 10 sur la platine de fixation. Pour ce faire, le rouet 10 comprend également des alésages agencés en regard des alésages 26 de la platine de fixation.

Pour faciliter la mise en appui des portions coniques, le fusible comprend en outre une entretoise 29 logée dans le corps 13. Le logement de cette entretoise 29 se fait par l'extrémité proximale du fusible mécanique. Cette entretoise permet de maintenir en appui la portion conique 22 de l'arbre 9 par l'extrémité distale 20 de forme conique du fusible. Un jeu radial est prévu entre l'entretoise 29 et le corps 13 du fusible mécanique 12 pour éviter les frottements et assurer la rupture au couple souhaité du fusible.

Cette entretoise 29 présente en outre un épaulement 30 permettant de limiter le déplacement axial du rouet 10 en cas de rupture mécanique du fusible. Un jeu axial est également prévu entre l'épaulement 30 de l'entretoise 29 et la platine 25 du fusible mécanique pour éviter les frottements et assurer la rupture au couple souhaité du fusible.

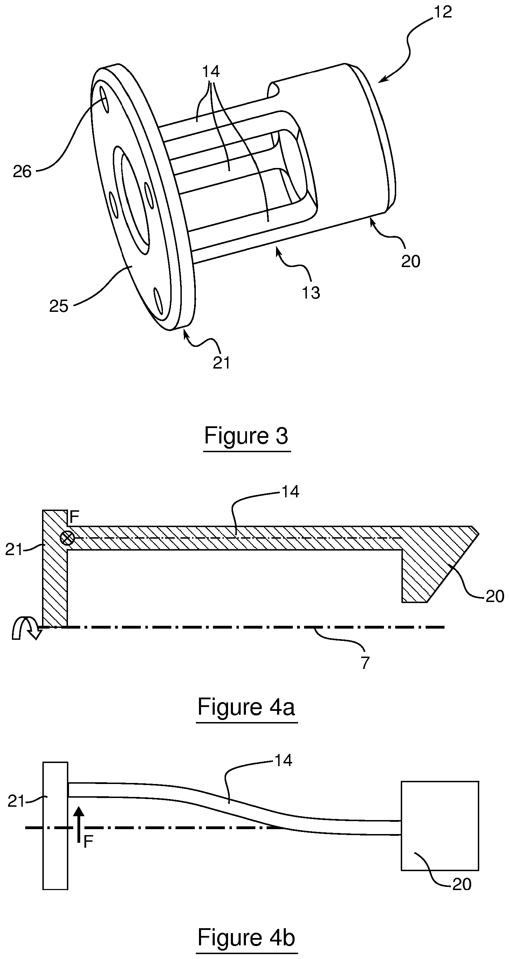

Le fusible mécanique selon le mode de réalisation des figures comprend en outre, et tel que représenté plus en détail sur la figure 3, trois barrettes 14 longitudinales réparties uniformément autour du corps creux 13, chaque barrette 14 étant adaptée pour être déformée en flexion. Les barrettes 14 reprennent le couple lié à l'entrainement du rouet 10 par le pignon 8 et travaillent en flexion.

Les figures 4a et 4b sont des vues schématiques d'une barrette 14 et de sa déformation en flexion. Comme on le constate, si un couple C est appliqué au fusible, alors chaque barrette est soumise à une force F tangente au corps 13 creux. Cette force F est tel que C=n.r.F, où r est le rayon de la fibre neutre par rapport à l'axe 7 de rotation et n est le nombre de barrettes (dans le cas présent, n=3). Suivant la théorie des poutres bi-encastrée, le moment M de flexion maximal est défini par la relation M=F.L/2, où L est la longueur d'une barrette. La figure 4b est une vue de dessus de la barrette 14 soumise à la force F. La barrette se déforme en flexion. On peut ensuite déterminer un critère de rupture des barrettes lorsque la valeur de la contrainte dans la section de la poutre est égale à la contrainte maximale quelle que soit la zone de la poutre. Cette valeur dépend de la plastification de la barrette et de la dispersion des matériaux.

Selon le mode de réalisation des figures, chaque barrette 14 présente une section droite transversale rectangulaire dont la longueur est de 2.95 mm et la largeur de 2.9 mm. La fibre neutre se situe sur un rayon de 6.475 mm par rapport à l'axe 7 de l'arbre. En outre, chaque barrette présente une longueur de 11.85 mm. Bien entendu, ces dimensions sont données uniquement à titre d'exemple et l'invention ne se limite pas à ce seul mode de réalisation. Les calculs montrent avec des barrettes en acier inoxydable, une plage de couple de rupture de 18.3 Nm à 40.5 Nm. En outre, les expériences montrent que sous un effort radial de 100 N, on obtient une raideur en flexion de 15453 N/mm, bien meilleure que la raideur de 7545 N/mm de l'art antérieur.

L'invention ne se limite pas aux seuls modes de réalisation décrits. En particulier, un fusible mécanique peut comprendre plus de trois barrettes.

## Revendications

1. Groupe de refroidissement d'un turbomoteur comprenant un arbre moteur (9) et un rouet (10) monté en porte à faux sur ledit arbre (9), ledit arbre moteur (9) et ledit rouet (10) tournant chacun autour d'un même axe (7) de rotation, le groupe de refroidissement comprenant un fusible (12) mécanique agencé entre ledit arbre moteur (9) et ledit rouet (10), le fusible (12) mécanique étant monté solidairement entre ledit arbre moteur (9) et ledit rouet (10), ledit fusible comprenant un corps (13) s'étendant selon une direction longitudinale parallèle audit axe (7) de rotation,
**caractérisé en ce que** ledit corps (13) comprend une pluralité de barrettes (14) longitudinales, chaque barrette (14) étant adaptée pour être déformée en flexion, sous l'action d'un couple de torsion appliqué à l'ensemble des barrettes, de sorte à former un fusible mécanique frangible.

2. Groupe de refroidissement selon la revendication 1, **caractérisé en ce que** le fusible (12) mécanique comprend des moyens d'accouplement réversible du fusible audit arbre moteur (9) agencés à une extrémité longitudinale dudit corps (13), dite extrémité distale (20).

3. Groupe de refroidissement selon la revendication 2, **caractérisé en ce que** ladite extrémité distale dudit corps (13) présente une portion conique ou une portion cylindrique, conformée à une portion conique (22) ou une portion cylindrique dudit arbre moteur (9).

4. Groupe de refroidissement selon l'une des revendications 1 à 3, **caractérisé en ce que** le fusible (12) mécanique comprend des moyens d'accouplement réversible du fusible audit rouet (10), agencés à une extrémité longitudinale dudit corps (13), dite extrémité proximale (21).

5. Groupe de refroidissement selon la revendication 4, **caractérisé en ce que** ladite extrémité proximale dudit corps (13) comprend une platine (25) de fixation adaptée pour être fixée sur ledit rouet (10).

6. Groupe de refroidissement selon l'une des revendications 1 à 5, **caractérisé en ce que** ledit corps (13) est creux.

7. Groupe de refroidissement selon les revendications 3, 4 et 6 prises ensemble, **caractérisé en ce que** le fusible (12) mécanique comprend une entretoise (29) adaptée pour être logée dans ledit corps creux (13) par ladite extrémité proximale (21) et pour pouvoir mettre en appui ladite portion conique de l'extrémité distale (20) sur ladite portion conique (22) conjuguée dudit arbre moteur (9).

8. Groupe de refroidissement selon la revendication 7, **caractérisé en ce que** ladite entretoise (29) présente un épaulement (30) permettant de limiter le déplacement axial dudit rouet (10) en cas de rupture mécanique du fusible.

9. Groupe de refroidissement selon l'une des revendications 1 à 8, **caractérisé en ce que** ledit corps (13) est cylindrique et **en ce qu'**il comprend trois barrettes (14) réparties uniformément autour dudit corps (13).

## Patentansprüche

1. Kühleinheit eines Turbinenmotors, umfassend eine Motorwelle (9) und ein Laufrad (10), das freitragend auf der Welle (9) montiert ist, wobei sich die Motorwelle (9) und das Laufrad (10) jeweils um eine gleiche Drehachse (7) drehen, wobei die Kühleinheit eine mechanische Sicherung (12) umfasst, die zwischen der Motorwelle (9) und dem Laufrad (10) angeordnet ist, wobei die mechanische Sicherung (12) fest verbunden zwischen der Motorwelle (9) und dem Laufrad (10) montiert ist, wobei die Sicherung einen Körper (13) umfasst, der sich gemäß einer Längsrichtung parallel zu der Drehachse (7) erstreckt,
**dadurch gekennzeichnet, dass** der Körper (13) eine Vielzahl von länglichen Stegen (14) umfasst, wobei jeder Steg (14) angepasst ist, um biegeverformt zu werden, unter der Wirkung eines Torsionsmoments, das auf die Gesamtheit der Stege angewendet wird, sodass eine brechbare mechanische Sicherung gebildet wird.

2. Kühleinheit nach Anspruch 1, **dadurch gekennzeichnet, dass** die mechanische Sicherung (12) Mittel zur reversiblen Kopplung der Sicherung an die Motorwelle (9) umfasst, die an einem Längsende des Körpers (13), als Distalende (20) bezeichnet, angeordnet sind.

3. Kühleinheit nach Anspruch 2, **dadurch gekennzeichnet, dass** das Distalende des Körpers (13) einen konischen Abschnitt oder einen zylindrischen Abschnitt aufweist, der einem konischen Abschnitt (22) oder einem zylindrischen Abschnitt der Motorwelle (9) angepasst ist.

4. Kühleinheit nach einem der Ansprüche 1 bis 3, **dadurch gekennzeichnet, dass** die mechanische Sicherung (12) Mittel zur reversiblen Kopplung der Sicherung an das Laufrad (10) umfasst, die an einem Längsende des Körpers (13), als Proximalende (21) bezeichnet, angeordnet sind.

5. Kühleinheit nach Anspruch 4, **dadurch gekennzeichnet, dass** das Proximalende des Körpers (13) eine Befestigungsplatte (25) umfasst, die angepasst ist, um auf dem Laufrad (10) befestigt zu werden.

6. Kühleinheit nach einem der Ansprüche 1 bis 5, **dadurch gekennzeichnet, dass** der Körper (13) hohl ist.

7. Kühleinheit nach den Ansprüchen 3, 4 und 6 zusammen genommen, **dadurch gekennzeichnet, dass** die mechanische Sicherung (12) einen Abstandhalter (29) umfasst, der angepasst ist, um in dem hohlen Körper (13) durch das Proximalende (21) aufgenommen zu werden und um den konischen Abschnitt des Distalendes (20) auf den entsprechenden konischen Abschnitt (22) der Motorwelle (9) auflegen zu können.

8. Kühleinheit nach Anspruch 7, **dadurch gekennzeichnet, dass** der Abstandhalter (29) eine Schulter (30) aufweist, die es ermöglicht, die axiale Verschiebung des Laufrads (10) im Fall eines mechanischen Bruchs der Sicherung zu begrenzen.

9. Kühleinheit nach einem der Ansprüche 1 bis 8, **dadurch gekennzeichnet, dass** der Körper (13) zylindrisch ist und dadurch, dass er drei Stege (14) umfasst, die gleichmäßig um den Körper (13) verteilt sind.

## Claims

1. Cooling unit of a turboshaft comprising a driving shaft (9) and an impeller (10) mounted in cantilever on said shaft (9), said driving shaft (9) and said impeller (10) each rotating around the same axis (7) of rotation, the cooling unit comprising a mechanical fuse (12) mounted between said driving shaft (9) and said impeller (10), the mechanical fuse (12) being fixed between said driving shaft (9) and said impeller (10), said fuse comprising a body (13) extending in a longitudinal direction parallel to said axis (7) of rotation,
**characterised in that** said body (13) comprises a plurality of longitudinal bars (14), each bar (14) being suitable for being deformed in bending, under the action of a torsional moment applied to all the bars, so as to form a breakable mechanical fuse.

2. Cooling unit according to claim 1, **characterised in that** the mechanical fuse (12) comprises means for the reversible coupling of the fuse to said driving shaft (9), which means are arranged at a longitudinal end of said body (13), referred to as the distal end (20).

3. Cooling unit according to claim 2, **characterised in that** said distal end of said body (13) has a conical portion or a cylindrical portion, which portion is adapted to a conical portion (22) or a cylindrical portion of said driving shaft (9).

4. Cooling unit according to any of claims 1 to 3, **characterised in that** the mechanical fuse (12) comprises means for the reversible coupling of the fuse to said impeller (10), which means are arranged at a longitudinal end of said body (13), referred to as the proximal end (21).

5. Cooling unit according to claim 4, **characterised in that** said proximal end of said body (13) comprises an attachment plate (25) suitable for being attached to said impeller (10).

6. Cooling unit according to any of claims 1 to 5, **characterised in that** said body (13) is hollow.

7. Cooling unit according to claims 3, 4 and 6 taken together, **characterised in that** the mechanical fuse (12) comprises a strut (29) suitable for being received in said hollow body (13) through said proximal end (21) and for being able to place said conical portion of the distal end (20) in abutment on said conjugate conical portion (22) of said driving shaft (9).

8. Cooling unit according to claim 7, **characterised in that** said strut (29) has a shoulder (30) that makes it possible to limit the axial movement of said impeller (10) in the event of mechanical breakage of the fuse.

9. Cooling unit according to any of claims 1 to 8, **characterised in that** said body (13) is cylindrical and **in that** it comprises three bars (14) distributed uniformly around said body (13).
